## Europäisches Patentamt
## European Patent Office
## Office européen des brevets

(19)

(11) Publication number: **0 157 559**
**B1**

(12)

# EUROPEAN PATENT SPECIFICATION

(45) Date of publication of patent specification: **26.07.89**

(51) Int. Cl.⁴: **F 16 J 3/04**

(21) Application number: **85302015.4**

(22) Date of filing: **22.03.85**

(54) Protective gaiters for joints.

(30) Priority: **29.03.84 GB 8408161**
**18.05.84 GB 8412710**

(43) Date of publication of application:
**09.10.85 Bulletin 85/41**

(45) Publication of the grant of the patent:
**26.07.89 Bulletin 89/30**

(84) Designated Contracting States:
**BE DE FR IT NL**

(56) References cited:
**DE-A-2 452 748**
**DE-U-1 983 864**
**DE-U-8 132 242**
**DE-U-8 319 944**
**FR-A-2 446 426**
**US-A-3 464 232**
**US-A-3 995 502**

(73) Proprietor: **Hayward, Philip Fields**
**47 Firbank Euxton**
**Chorley Lancashire PR7 6HP (GB)**

(72) Inventor: **Hayward, Philip Fields**
**47 Firbank Euxton**
**Chorley Lancashire PR7 6HP (GB)**

(74) Representative: **Quest, Barry et al**
**M'CAW & Co. 41-51 Royal Exchange Cross Street**
**Manchester M2 7BD (GB)**

## Description

This invention relates to protective gaiters for joints particularly although not exclusively for use in motor vehicles.

Flexible rubber gaiters are used in motor cars to protect constant velocity joints and joints defined between steering racks and track rods so as to prevent ingress of dirt and moisture and egress of lubricants.

These gaiters customarily comprise one-piece moulded tubes having cylindrical end portions suitably diametered to fit the pertaining joint members and a convoluted central portion which can flex to allow bending and change of length. Flexible rubber gaiters having fixed-diameter end portions and convoluted central portions are disclosed in DE-U-1983864, US-A-3464232 and US-A-3995502.

However, constant velocity joints of different motor car models usually have different dimensions (different diameters and/or axial spacings of the joint members) and hitherto to allow for this it has been found necessary to provide a corresponding range of differently dimensioned gaiters. This however is not wholly satisfactory having regard to the manufacturing costs and also due to the inconvenience of maintaining stocks of the different gaiters.

In DE-U-8319444 there is disclosed a flexible tubular gaiter having several fixing channels of different diameters, the gaiter being cut prior to installation to leave end fixing channels of desired diameters. The gaiter has convolutions but these are disposed between individual fixing channels whereby the characteristics of the gaiter are appreciably changed when it is cut.

An object of the present invention is to provide a gaiter which can be readily adapted to fit a range of differently dimensioned joints.

According to a first aspect of the invention therefore there is provided a protective gaiter to fit around a lubricated joint between joint members, said gaiter comprising a flexible tubular body having first and second ends and a central portion between said ends, said tubular body having folds therein so as to permit axial extension of the body, and said ends having axially spaced annular fitting sections incorporating annular seating channels to receive fixing devices for clamping inner surfaces of said ends into sealing engagement with the joint members, the fitting sections having progressively increased internal diameters whereby the inner surface of each end can be clamped into sealing engagement with joint members of different diameters corresponding to the different said internal diameters, characterised in that the tubular body is generally conically tapered whereby the fitting sections are defined by stepped configurations and have diameters at the wider end which increase away from the central portion and diameters at the narrower end which increase towards the central portion, and said folds are provided exclusively in said central portion between said stepped configurations.

With this arrangement the gaiter can be readily adapted to fit different joints having joint members of different diameters by selection of the appropriate fitting section for sealing engagement with the pertaining joint member. Fitting sections not selected may be cut away as desired and as appropriate before or after fitting on the joint. Moreover, the folds in the central portion of the body permit adjustment of the length of the gaiter to accomodate differences in joint lengths and to enable a desired length to be attained irrespective of which fitting section is selected.

Preferably the said central portion extends for a minor proportion of the length of the tubular body. Preferably also said central portion is folded over itself so as to permit axial extension and contraction of the tubular body.

Each fitting section may be appropriately configured on its inner surface for cooperation with a sealing configuration on the pertaining joint member. Thus each fitting section may have one or more circumferential ribs for cooperation with a sealing groove or grooves. In a particularly preferred embodiment, each fitting section has a plurality of triangular ribs arranged so that one such rib can be selected for engagement with a single sealing groove.

With regard to the central portion this may have a double fold of S shape.

The gaiter may be moulded in one piece from any suitable natural or synthetic rubber material.

A further problem with the above mentioned known gaiters is that it is necessary to dismantle the joint members when a gaiter becomes damaged and requires replacement.

FR-A-2446426 describes a split gaiter which can be fitted around a joint without dismantling the joint members. However, the gaiter has preformed folds and is adapted to fit a particular joint.

The gaiter is, for example, not adapted for fitting to different joints having axial spacings between joint members.

A further object of the present invention is to facilitate installation of flexible gaiters around joints having different axial spacings of joint members without requiring dismantling of the joint members.

According to a second aspect of the invention there is provided a method of installing a gaiter around a joint defined between first and second joint members using a flexible shaped sheet in the form of a tubular body having a slit along its length, wherein said sheet is wrapped around the first joint member, opposite edges of said sheet defining said slit are secured together and opposite ends of the body are fixed respectively to the two joint members characterised in that the body is turned over on itself, before both said ends have been fixed to said joint members, to define at least one fold between tubular portions of said body.

The arrangement may be such that the body is fixed at the pertaining end thereof to the first joint member prior to formation of the said fold, a U-shaped fold is then formed by turning the body back over said end fixed to the joint member, and the opposite end of the body is then fixed to the second joint member. Alternatively or additionally the arrangement may be such that the body is fixed at the pertaining end thereof to the first joint member prior to formation of the said fold, an S-shaped fold is then formed by turning the body backwards and forwards intermediate the ends thereof, and the opposite end of the body is then fixed to the second joint member.

Most preferably the said slit edges have cooperable configurations therealong which press fit or otherwise interlock to facilitate closure of the slit. Alternatively or additionally, preferably additionally, the slit edges are bonded together particularly with a sealing cement.

The shaped sheet may be pre-dimensioned at at least one end to suit a particular joint member diameter. Preferably however the said shaped sheet is tapered towards one or both ends thereof or has stepped fitting sections to facilitate attachment to joint members of different diameters. Tapering of the shaped sheet towards the said one end is also desirable in so far as it facilitates the aforementioned turning-back procedure.

It is visualised that the invention will find particular (although not exclusive) application in the context of the replacement of existing gaiters in steering rack and constant velocity joints of motor vehicles.

The invention will now be described further by way of example only and with reference to the accompanying drawings in which:

Figure 1 is a diagrammatic sectional view of a motor car steering rack joint fitted with a conventional gaiter;

Figure 2 is a view similar to Figure 1 showing a gaiter in accordance with one form of the present invention;

Figure 3 is a sectional view to a larger scale of part of the fitted gaiter of Figure 2;

Figure 4 is a plan view of a structure utilised in forming the gaiter of Figures 2 and 3;

Figures 5 and 6 are views similar to Figure 2 of alternative embodiments;

Figure 7 is an axial sectional view of a further form of a gaiter according to the invention;

Figure 8 is a view to a larger scale of a detail of the gaiter of Figure 7; and

Figure 9 is a view similar to Figure 7 of an alternative embodiment.

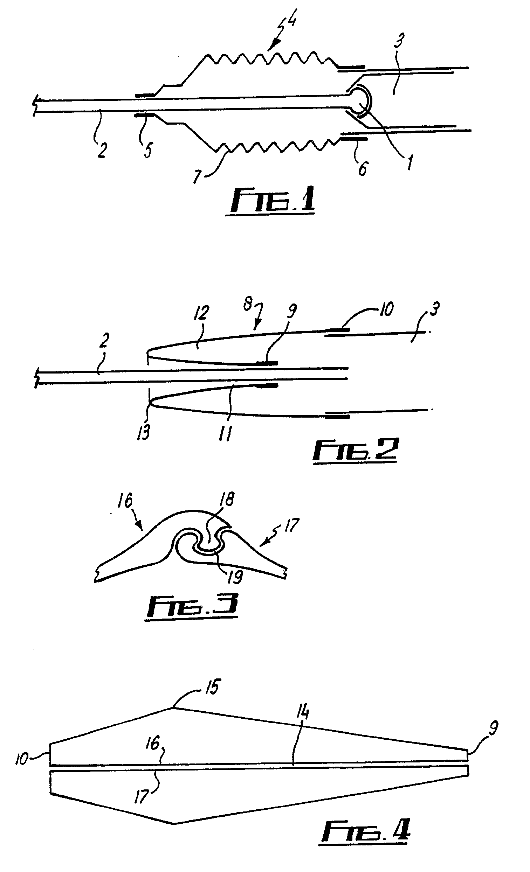

Figure 1 shows a conventional joint 1 defined between a track rod 2 and a steering rack 3. Figure 1 also shows a conventional gaiter 4 fitted around the joint 1, such gaiter 4 comprising a flexible rubber tube having a narrow cylindrical end 5 which is clipped tightly around the track rod 2, a wide cylindrical end 6 which is clipped tightly around the steering rack 3, and a convoluted central portion 7. The gaiter 4 is filled with lubricant and can flex at the convolutions to permit bending and longitudinal movement.

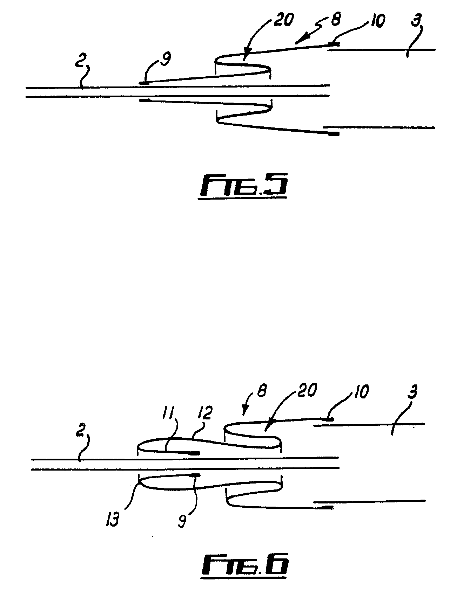

The gaiter 8 shown in Figure 2 comprises a flexible rubber tube having a narrow end 9 which is clipped tightly around the track rod 2 and a wide end 10 which is clipped tightly around the rack 3. The end portion 11 of the tube 8 adjacent the narrow end 9 is inturned within the adjacent central body portion 12 of the tube 8 thereby defining a fold 13 between such portions 11, 12. This gaiter 8 can be filled with lubricant in conventional manner and can accomodate bending and longitudinal movement by flexing about the fold 13 and by movement of the portion 11 inwardly and outwardly of the portion 12.

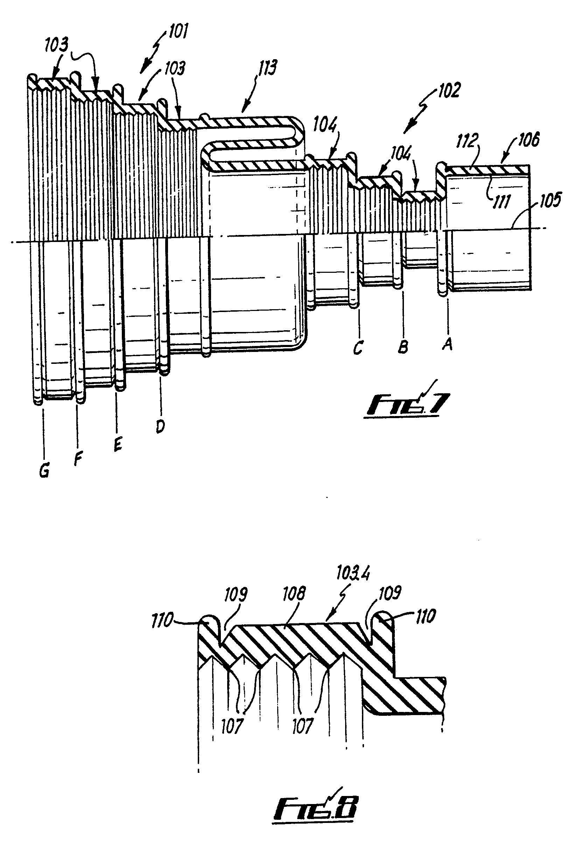

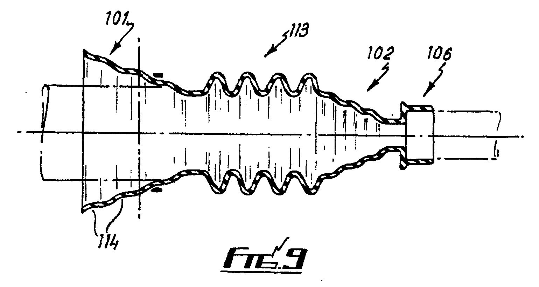

The gaiter 8 is formed from a one-piece moulded sheet as shown in Figure 4 in the form of a tubular body generally circular cross-section throughout having a slit 14 along its entire length. The shaped sheet is tapered over a major part of its length from a position 15 of maximum diameter to the said narrow end 9 and is tapered from said position 15 to the opposite said wider end 10. The edges 16, 17 of the sheet bounding the slit are provided with configurations 18, 19 as shown in Figure 3, which can press fit into interlocking engagement with each other.

The gaiter 8 is installed around the joint, in the fillowing manner. With the slit 14 open the narrow end 9 is wrapped around the track rod 2 with the other end 10 facing away from the rack 3 and the narrow end 9 is held in position with the usual clip (not shown). The slit 14 is closed by pressing the configurations 18, 19 into engagement with each other and a rubber cement is applied to the configurations to fix and seal same. The cement has suitable elasticity and mechanical properties as well as resistance to oils, greases and ageing. The cement is applied with a bonding agent or solution which gives a setting time of about 10 minutes to give ample time to locate the interlocking configurations.

The configurations are located so that they do not interfere with secure attachment of the gaiter to the track rod 2 and rack 3.

After setting of the cement, the tubular body is folded over to bring the wider end 10 onto the rack 3. The wider end 10 is then fixed in position with the usual clip (not shown) after first inserting lubricant into the gaiter in the usual manner.

In this way it will be seen that a satisfactory gaiter can be installed without requiring any dismantling of the joint.

Lengths of one or both of the tapered end portions of the shaped sheet may be cut off prior to fitting to give a desired end diameter adapted to the diameter of the pertaining joint member 2 or 3.

The embodiments of Figures 5 and 6 are identical with the embodiment of Figures 2 to 4 (and like reference numerals are used for like parts) except that the tubular body 8 is folded backwards and forwards during fitting to give an S-shaped fold 20. This fold 20 may be instead of the fold 13 (Figure 2) or in addition thereto. This fold 20 provides general flexibility and also permits longitudinal adjustment to accommodate joints having different longitudinal dimensions. Reference is made to Figure 7 described hereinafter and which shows a suitable S-shaped fold in greater detail.

Although it is preferred that the gaiter should be formed from a shaped sheet having a flat or generally flat outer surface as shown in Figure 4, it may be possible to use with the interlock of Figure 3 a pre-moulded convoluted configuration which may be like the conventional structure shown in Figure 1 or which may be of a less pronounced nature (comprising for example shallow waves) or a pre-moulded S-shaped fold of the kind shown in Figures 5 and 6. Indeed, it may be possible to rely wholly on pre-moulded convolutions for flexibility instead of forming a fold in situ.

The gaiter of Figures 7 and 8 comprises a one-piece moulded rubber tube generally of frusto-conical form.

The end portions 101, 102 of the tube are each stepped to define a number of annular fitting sections 103, 104 of progressively increasing diameter which extend parallel to the tube axis 105. At the wider end of the tube there are four such sections 103 increasing in diameter towards the pertaining free end. At the narrower end there are three such sections 104 decreasing in diameter towards the pertaining free end. At the extremity of the narrower end there is a cylindrical section 106 of larger diameter than the smallest fitting section 104.

As better shown in Figure 8 each section 103, 104 is provided with circumferential triangular section ribs 107 on its inner surface which are coaxial with the tube axis 105. On its outer surface each section 103, 104 has a flat central annular surface 108 bounded by grooves 109 and upstanding ribs 110. The end cylindrical section 106 has flat surfaces 111, 112 both internally and externally.

The central portion 113 of the gaiter comprises a flat-surfaced tubular portion which is folded over itself to define an S-shaped bend.

In use the gaiter is fitted around a joint (such as a motor car constant velocity joint) and is secured in position (after filling with a suitable lubricant) by clamping one of the sections 103 at the wider end around one joint member and one of the sections 104 or 106 at the narrower end around the other joint member.

Sections 103, 104, 106 which are outwardly of the sections which are clamped in position may be cut away at respective ones of the positions identified by letters A-G on the drawing.

The sections 103, 104 and 106 are clamped in position by circlips or the like around the outer surfaces 108, 112 of the sections. In accordance with usual practice each joint member may have a circumferential sealing groove and the sections 103, 104 deform on clamping to force one of the ribs 107 into the groove. In this respect the triangular shape of the ribs 107 facilitates sealing engagement even if the groove is of part circular or square or other section.

The length of the gaiter is adjusted as required by extension or contraction of the gaiter at the folded central portion 113. In this respect the gaiter may be manufactured with the S-bend preformed and so as to be capable of deformation as required. Alternatively, the gaiter may be manufactured with a straight (frusto-conical) central portion which is folded to form the S bend to an appropriate extent during or prior to fitting.

With this arrangement, it will be appreciated that the gaiter can be readily adapted to fit a range of joints. The need to manufacture and stock a wide range of gaiters to fit different joints can therefore be avoided or at least minimised.

As shown in Figure 9 (in which like numerals are used for corresponding parts to Figure 7) as an alternative to the use of the S bend in the central portion 113 it is possible to use convolutions if these are of adequate flexibility and extensibility. Moreover instead of the stepped sections 103 it is possible to use circumferential grooves 114 of wavy profile.

As shown in Figure 10 it is even possible to use straight-sided frustoconical end portions 101, 102 if these are of sufficient flexibility to be clamped, as shown, into sealing engagement with the joint members by the circlips or ties 115, 116 used.

## Claims

1. A protective gaiter to fit around a lubricated joint between joint members, said gaiter comprising a flexible tubular body having first and second ends (101, 102) and a central portion between said ends, said tubular body having folds (113) therein so as to permit axial extension of the body, and said ends having axially spaced annular fitting sections (103, 104) incorporating annular seating channels to receive fixing devices for clamping inner surfaces of said ends into sealing engagement with the joint members, the fitting sections having progressively increased internal diameters whereby the inner surface of each end can be clamped into sealing engagement with joint members of different diameters corresponding to the different said internal diameters, characterised in that the tubular body is generally conically tapered whereby the fitting sections (103, 104) are defined by stepped configurations and have diameters at the wider end which increase away from the central portion and diameters at the narrower end which increase towards the central portion, and said folds (113) are provided exclusively in said central portion between said stepped configurations.

2. A protective gaiter according to claim 1, characterised in that the said central portion extends for a minor proportion of the length of the tubular body.

3. A protective gaiter according to claim 1 or 2, characterised in that said central portion is folded over itself so as to permit axial extension and contraction of the tubular body.

4. A protective gaiter according to claim 3, characterised in that the central portion has a double fold (113) of S-shape.

5. A protective gaiter according to any one of claims 1 to 4, characterised in that each fitting section (103, 104) has one or more circumferential ribs (107) on its inner surface for co-operation with a sealing groove or grooves on the pertaining joint member.

6. A method of installing a gaiter around a joint defined between first and second joint members (2, 3) using a flexible shaped sheet in the form of a tubular body having a slit (14) along its length, wherein said sheet is wrapped around the first joint member, opposite edges (16, 17) of said sheet defining said slit are secured together and opposite ends of the body are fixed respectively to the two joint members characterised in that the body is turned over on itself, before both said ends have been fixed to said joint members, to define at least one fold between tubular portions of said body.

## Patentansprüche

1. Schutzmanschette zum passenden Umschließen einer geschmierten Gelenkverbindung zwischen Gelenkgliedern, wobei die Manschette einen flexiblen rohrförmigen Körper mit einem ersten und einem zweiten Ende (101, 102) und einem zentralen Bereich zwischen den Enden aufweist, wobei in dem rohrförmigen Körper Falten (113) vorhanden sind, so daß ein axiales Ausziehen des Körpers möglich ist, und wobei die Enden axial voneinander beabstandete, ringförmige Paßabschnitte (103, 104) aufweisen, in die ringförmige Sitzkanäle zur Aufnahme von Fixiervorrichtungen zum Festklemmen der Innenflächen der Enden in abdichtenden Eingriff mit den Gelenkgliedern integriert sind, wobei die Paßabschnitte fortschreitend zunehmende Innendurchmesser aufweisen, wodurch sich die Innenfläche jedes Endes mit Gelenkgliedern unterschiedlicher Durchmesser entsprechend den verschiedenen genannten Innendurchmessern in abdichtenden Eingriff klemmen läßt, dadurch gekennzeichnet, daß der rohrförmige Körper im wesentlichen konisch verjüngt ausgebildet ist, wobei die Paßabschnitte (103, 104) durch stufige Konfigurationen definiert sind und an dem weiteren Ende in Richtung von dem zentralen Bereich weg zunehmende Durchmesser und an dem schmaleren Ende in Richtung auf den zentralen Bereich zu zunehmende Durchmesser aufweisen, und daß die Falten (113) ausschließlich in dem zentralen Bereich zwischen den stufigen Konfigurationen vorgesehen sind.

2. Schutzmanschette nach Anspruch 1, dadurch gekennzeichnet, daß sich der genannte zentrale Bereich über einen geringeren Anteil der Länge des rohrförmigen Körpers erstreckt.

3. Schutzmanschette nach Anspruch 1 oder 2, dadurch gekennzeichnet, daß der zentrale Bereich derart um sich selbst zurückgefaltet ist, daß ein axiales Ausziehen und Zusammenbewegen des rohrförmigen Körpers ermöglicht ist.

4. Schutzmanschette nach Anspruch 3, dadurch gekennzeichnet, daß der zentrale Bereich eine Doppelfalte (113) in S-Form aufweist.

5. Schutzmanschette nach einem der Ansprüche 1 bis 4, dadurch gekennzeichnet, daß jeder Paßabschnitt (103, 104) an seiner Innenfläche eine oder mehrere umfangsmäßig umlaufende Rippen (107) zum Zusammenwirken mit einer Dichtnut bzw. Dichtnuten an dem jeweiligen Gelenkglied aufweist.

6. Verfahren zum Montieren einer Manschette um eine zwischen einem ersten und einem zweiten Gelenkglied (2, 3) definierte Gelenkverbindung unter Verwendung eines flexiblen, geformten Flachmaterialstücks in Form eines rohrförmigen Körpers mit einem Schlitz (14) entlang seiner Länge, bei dem das Flachmaterialstück um das erste Gelenkglied geschlungen wird, einander gegenüberliegende und den Schlitz definierende Kanten (16, 17) des Flachmaterialstücks aneinander befestigt werden und einander entgegengesetzte Enden des Körpers jeweils an den beiden Gelenkgliedern angebracht werden, der dadurch gekennzeichnet, daß der Körper vor dem Anbringen der beiden genannten Enden an den Gelenkgliedern um sich selbst zurückgestülpt wird und dadurch wenigstens eine Falte zwischen rohrförmigen Bereichen des Körpers gebildet wird.

## Revendications

1. Gaine protectrice destinée à être montée autour d'un joint lubrifié entre des éléments de joint, ladite gaine comprenant un corps tubulaire souple comportant une première et une seconde extrémités (101, 102) et une partie centrale entre lesdites extrémités, le corps tubulaire comportant des plis intérieurs (113) permettant l'extension axiale du corps, lesdites extrémités comportant des sections annulaires de raccordement (103, 104) axialement espacées et incorporant des gorges formant sièges destinés à recevoir des dispositifs de fixation afin de serrer des surfaces internes desdites extrémités en coopération étanche avec les éléments de joint, les sections de raccordement ayant des diamètres internes augmentant progressivement de sorte que la surface interne de chaque extrémité peut être serrée afin de coopérer de façon étanche avec des éléments de joint de diamètres différents correspondant aux diamètres internes différents, caractérisée en ce que le corps tubulaire est globalement effilé en forme de cône, les sections de raccordement (103, 104) étant définies par des configurations en gradins et ayant des diamètres à l'extrémité la plus large qui augmentent à partir de la portion centrale et des diamètres à l'extrémité la plus étroite qui augmentent vers la partie centrale, lesdits plis (113) étant prévus uniquement dans la partie centrale entre lesdites configurations en gradins.

2. Gaine protectrice suivant la revendication 1, caractérisée en ce que ladite partie centrale s'étend sur une partie relativement petite de la longueur du corps tubulaire.

3. Gaine protectrice suivant la revendication 1 ou 2, caractérisée en ce que partie centrale est repliée sur elle-même de façon à permettre des extensions et contractions axiales du corps tubulaire.

4. Gaine protectrice suivant la revendication 3, caractérisée en ce que la partie centrale comporte un pli double (113) en forme de S.

5. Gaine protectrice suivant l'une quelconque des revendications 1 à 4, caractérisée en ce que chaque section de raccordement (103, 104) comporte une ou plusieurs nervures circonférentielles (107) sur sa surface interne destinées à coopérer avec une ou plusieurs rainures d'étanchéité disposées sur l'élément de joint associé.

6. Procédé de montage d'une gaine autour d'un joint défini entre un premier et second élément de joint (2, 3) en utilisant une feuille souple ayant la forme d'un corps tubulaire comportant une fente (14) s'étendant sur toute sa longueur, comprenant les phases consistant à envelopper la feuille autour du premier élément de joint, à fixer l'un à l'autre les rebords opposés (16, 17) de ladite feuille définissant la fente, et à fixer les extrémités opposées du corps aux deux éléments de joint respectifs, caractérisée en ce qu'il consiste en outre à plier ledit corps sur lui-même avant de fixer lesdites extrémités aux éléments de joint, de façon à définir au moins un pli entre des parties tubulaires dudit corps.

FIG.1

FIG.2

FIG.3

FIG.4

**Fig.5**

**Fig.6**

FIG.7

FIG.8

3

101 113 102 106

114

FIG.9